# EUROPÄISCHE PATENTSCHRIFT

(11) **EP 0 890 398 B1**
(45) Veröffentlichungstag und Bekanntmachung des Hinweises auf die Patenterteilung: **14.03.2001**
(21) Anmeldenummer: 98112113.0
(22) Anmeldetag: 01.07.1998
(51) Int. Cl.: B21D 43/02, B23P 21/00, B23P 19/00

(54) **Verfahren und Vorrichtung zur Herstellung von mehrteiligen Kontakt- oder Schaltelementen**
Method and apparatus for producing multiple-part electrical contacts or switching elements
Procédé et dispositif pour réaliser des éléments de contacts électriques ou de commutateurs en plusieurs parties

(30) Priorität: 10.07.1997 DE 19729482
(43) Veröffentlichungstag der Anmeldung: 13.01.1999
(73) Patentinhaber: Fritz$Stepper GmbH & Co. KG, 75180 Pforzheim (DE)
(72) Erfinder: Stepper, Fritz, 75173 Pforzheim (DE)
(74) Vertreter: Frank, Gerhard, Dipl.-Phys.

(56) Entgegenhaltungen:
- EP-A- 0 495 272
- DE-A- 4 300 876
- DE-A- 4 410 178
- PATENT ABSTRACTS OF JAPAN vol. 7, no. 246 (M-253), 2. November 1983 & JP 58 132430 A (HITACHI SEISAKUSHO KK), 6. August 1983

## Beschreibung

Die Erfindung betrifft ein Verfahren und eine Vorrichtung gemäß dem Oberbegriff des Patentanspruchs 1, bzw.7.

Ein derartiges Verfahren und eine hierzu geeignete Vorrichtung sind aus der DE-PS-43 00 876 bekannt.

Bei solchen Verfahren geht es insbesondere um die Verbindung von zweiteiligen Stanzteilen, die parallel zueinander zugeführt und dann miteinander unter Verformung zumindest eines Stanzteils verbunden werden. Es muß also zwischen den beiden Stanzteilen ein bestimmter Weg zu deren Verbindung zurückgelegt werden, der in der Regel senkrecht zur Förderung der beiden Stanzteilreihen liegt, aus denen die zu verbindenden Teile vereinzelt werden.

Die Kosten für den Herstellungsaufwand solcher Teile werden wesentlich mitbestimmt durch die Ausnutzung der verwendeten Stanzen und Pressen, die einen erheblichen Anschaffungswert haben. Folglich wird das fertiggestellte Schalt- oder Kontaktelement umso billiger, je höher die Taktrate ist, mit der die zur Herstellung verwendeten Maschinen arbeiten können. Bei der gattungsgemäßen Vorrichtung und dem von dieser durchgeführten Verfahren ist der Arbeitstakt jedoch nach oben hin durch physikalische Randbedingungen begrenzt:

Der zwischen den beiden Stanzteilen senkrecht zur Förderrichtung ihrer Stanzteilreihen zurückzulegende Montageweg erfordert mit zunehmendem Takt eine immer schnellere Beschleunigung und ein immer schnelleres Abbremsen sowohl des zugeführten Teils als auch der hierfür verwendeten Maschinenteile. Bei zunehmenden Taktzahlen treten hier folglich erhebliche Massenträgheitskräfte auf, sowohl seitens der Stanzteile als auch der verwendeten Maschinenteile, die zu einem unruhigen und zunehmend unkontrollierbaren Zuführverhalten führen mit der Folge, daß mit unbegrenzt ansteigender Taktzahl die Wahrscheinlichkeit von Fehlfunktionen und somit die Ausschußrate zunimmt, was den Vorteil höherer Taktzahlen bald wieder zunichte macht.

Es ist folglich Aufgabe der Erfindung, den Zuführmechanismus so zu verbessern, daß eine erhebliche Erhöhung der Taktzahl erreicht wird.

Erfindungsgemäß wird diese Aufgabe durch ein Verfahren bzw. durch eine Vorrichtung gemäß dem Patentanspruch 1 bzw. 7 gelöst.

Der Grundgedanke der Erfindung besteht daher in der Minimierung von Wegstrecken bei der eigentlichen Montage der Kontakt- oder Schaltelemente.

Die Verringerung der Wegstrecken erlaubt eine Verringerung der Beschleunigungs- und Abbremskräfte, da in vergleichbarer Zeit eine geringere Montagestrecke zurückgelegt werden muß. Daraus wiederum resultiert eine wesentliche bauliche Verringerung der Vorschubmechanismen wie Stempel oder Stößel, damit deren Antriebsteile und damit auch der oben angesprochenen Massen- und Trägheitskräfte beim Beschleunigen und Abbremsen solcher Maschinenteile. Damit können diejenigen "Wartezeiten", die bisher einkalkuliert werden mußten, um beispielsweise ein "Nachzittern" der Bauteile und der Maschinenteile nach einem erprobten Bewegungswechsel ausklingen zu lassen, wesentlich verkürzt werden. Dies wiederum erlaubt seinerseits eine wesentlich dichtere Aufeinanderfolge von Stanzteilen zu ihren zugeordneten Basisteilen zur Montage, was letztlich dann einen wesentlich höheren Arbeitstakt ermöglicht.

Ausführungsbeispiele des erfindungsgemäßen Verfahrens bzw. der erfindungsgemäßen Vorrichtung sind den Unteransprüchen zu entnehmen.

Der Stand der Technik und bevorzugte Ausführungsbeispiele der Erfindung werden nun anhand von Zeichnungen näher erläutert; es zeigen:
- Fig. A und B: Aufsicht und Seitenansicht einer Vorrichtung zur Durchführung eines Verfahrens nach dem Stand der Technik,
- Fig. 1: eine Prinzipdarstellung einer ersten Variante des erfindungsgemäßen Verfahrens,
- Fig. 2: die beiden Bauteil reihen der Figur 1 in der Aufsicht in einer zugeordneten Vorrichtung,
- Fig. 3: einen ersten Schnitt durch die Vorrichtung der Figur 2 in der Ebene A-A,
- Fig. 4: einen zweiten Schnitt durch die Vorrichtung nach Figur 2 in der Ebene B-B,
- Fig. 5: das Prinzip der kontinuierlichen Montage, und
- Fig. 6: eine Prinzipdarstellung einer zweiten Variante des erfindungsgemäßen Verfahrens.

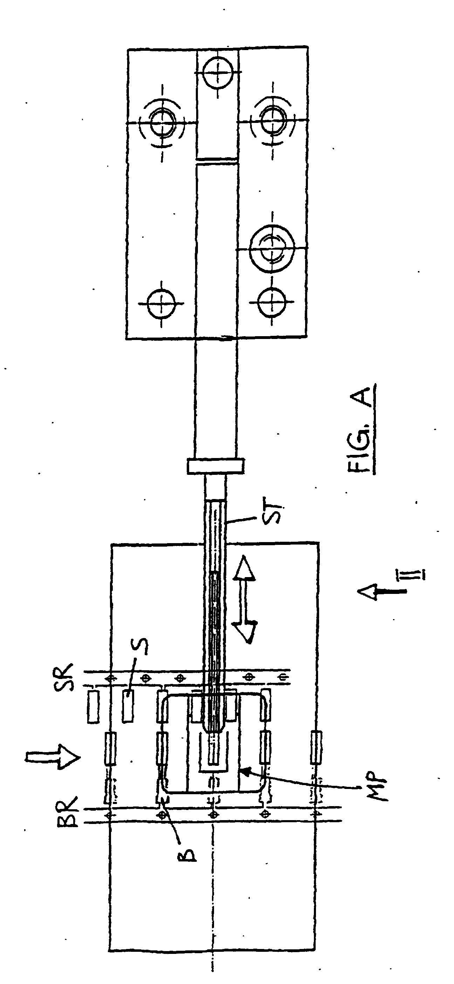

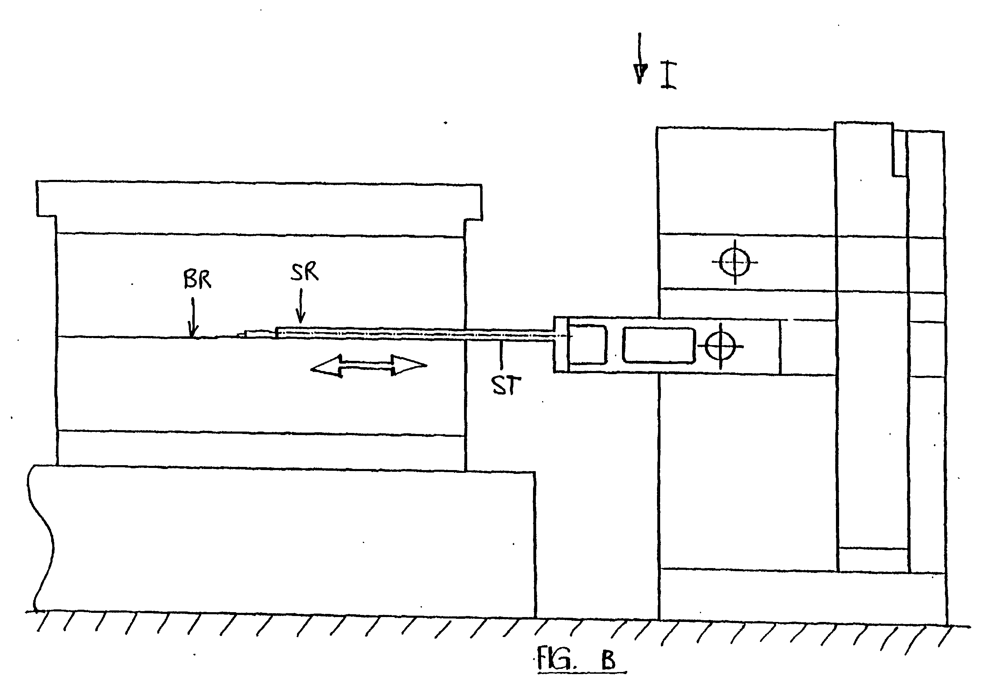

In der Fig. 1 ist Aufbau und Arbeitsweise einer Vorrichtung skizziert, wie sie beispielsweise in der eingangs genannten DE-PS 43 00 876 im einzelnen beschrieben worden ist:

Einem links in Fig. 1A in der Aufsicht gezeigten Pressentisch werden in Pfeilrichtung eine Stanzteilreihe SR und eine Basisteilreihe BR zugeführt, in der in der Mitte dargestellten Montageposition MP werden die Stanzteile S vereinzelt und mit einem horizontal senkrecht zur Förderrichtung von Stanzteilreihe und Basisteilreihe arbeitenden Stempel ST auf "ihr" synchron zugeführtes Basisteil geschoben und dort montiert, in der Regel unter Verformung. Fig. 1B zeigt dieselbe Prinzipanordnung in einer Seitenansicht.

Figur 1 zeigt eine schematische Darstellung des Erfindungsprinzips:

Eine erste Reihe R1 beinhaltet erste. Bauteile 10, die über einen Montagestreifen 11 in gleichen Abständen miteinander verbunden sind, dieser ersten Reihe zugeordnet ist eine zweite Reihe R2, an der zweite Bauteile 20 an einem entsprechenden Montagestreifen 21 gehalten sind.

Bei ihrer Zuführung befinden sich die Längsachsen der Montagestreifen 11,21 in einem Eingangsabstand L1, der in der Regel durch konstruktive Vorgaben seitens der Zuführeinrichtungen derart vorgegeben ist, daß der stirnseitige Abstand der gegenüberliegenden Bauteile 10 und 20 relativ groß ist.

Bei den beispielhaft skizzierten ersten und zweiten Bauteilen 10 und 20 handelt es sich um solche Kontaktteile, die stirnseitig ineinandergesteckt werden und zu ihrer Verbindung verformt werden müssen, d.h., die Längsachsen der beiden Montagestreifen 11 und 21 befinden sich in der gleichen Ebene, so daß sich die ersten und zweiten Bauteile 10, 20 stirnseitig gegenüberliegen.

Im Unterschied zur eingangs skizzierten- konventionellen Lösung nach dem Stand der Technik wird der Montageweg, der senkrecht zur Längsachse des ersten Montagestreifens 11 von den zweiten Bauteilen 20 mittels geeigneter Montage-Vorrichtungen überwunden werden muß, zunächst so weit wie möglich verringert, ohne daß ein eigentlicher Montageschritt erforderlich ist, also auf den in Figur 1 gezeigten Ausgangsabstand L2, bei dem die Stirnseiten der ersten und zweiten Bauteile 10 und 20 unmittelbar montagebereit einander gegenüberliegen. Die systemgemäße Montage der beiden Bauteile durch axiales Ineinanderstecken erfordert also die Positionierung in der gleichen (Zeichen-)Ebene.

Entscheidend hierzu ist, daß diese, die eigentliche Montage-vorbereitende "Vorpositionierung" nicht durch die üblichen Stempelhübe, also abrupte Schiebebewegungen mit den eingangs geschilderten Nachteilen erzeugt wird, sondern über eine Positionierungsstrecke S1 durch eine stetige oder kontinuierliche Heranführung des Montagestreifens 21 mit den zweiten Bauteilen 20 in die beabsichtigte stirnseitige Montageposition. Beim dargestellten Ausführungsbeispiel ist die Positionierungsstrecke S1 S-förmig ausgebildet, um den Eingangsabstand L1 auf den Ausgangsabstand L2 zu reduzieren.

Die bogenförmige Abkrümmung der Reihe R2 ist allerdings nur möglich, wenn der Montagestreifen 21 entsprechend flexibel ausgeführt ist, um eine derartige Abbiegung ohne all zu großen apparativen Aufwand und Verformungskräfte durchführen zu können. Bei der in Figur 1 dargestellten Lösung wird dies dadurch erreicht, daß in einer Biegestation A0 der Montagestreifen 21 um 90° in seiner Längsachse abgewinkelt wird, so daß er nach der Biegestation senkrecht zur Zeichenebene steht und lediglich die unmittelbar an den zweiten Bauteilen 20 angrenzenden T-förmigen Abschnitte in der Zeichenebene und damit in der gleichen Ebene wie der erste Montagestreifen 11 verbleiben. In dieser Positionierung des Montagestreifens 21 sind die Voraussetzungen für eine präzise und sichere Abbiegung in der Positionierungsstrecke S1 gegeben, so daß dann danach beispielsweise in konventioneller Technik in einer Vereinzelungsstation A1 und Montagestationen A2 und A3 die gewünschte Verbindung der beiden Bauteile 10 und 20 erfolgen kann.

Es ist auch möglich, durch eine andere Formgebung des Montagestreifens 21 eine solche Verformung in der Positionierungsstrecke S1 zu erleichtern, beispielsweise durch eine ziehharmonikaförmige oder mäanderförmige Formgebung.

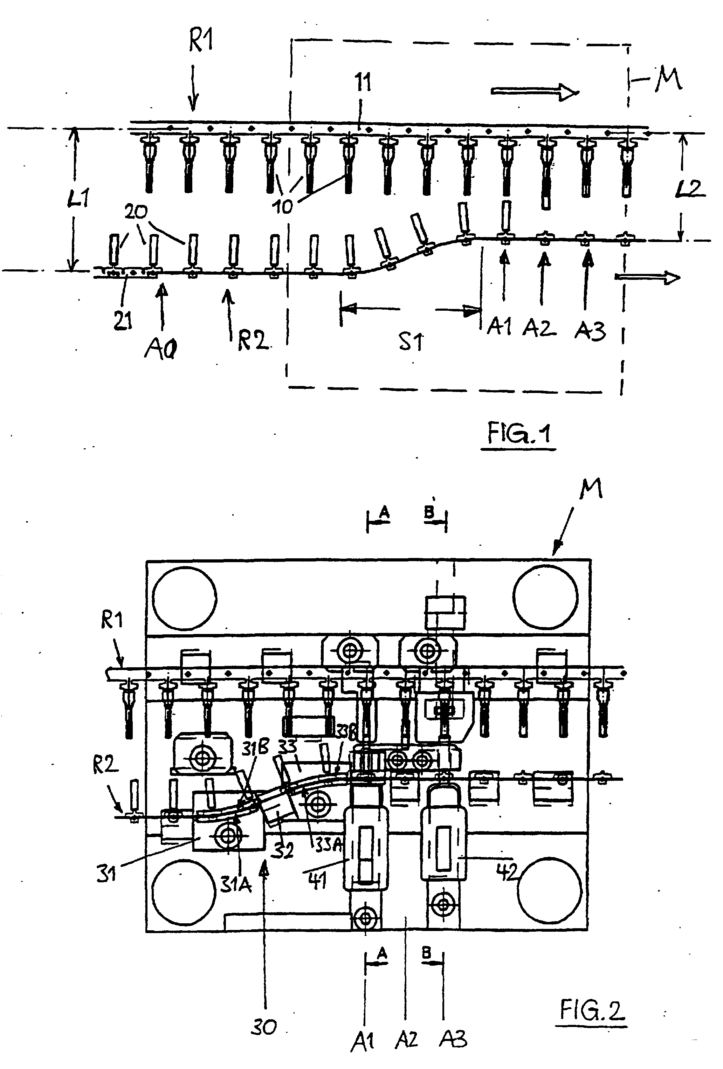

Figur 2 zeigt eine Aufsicht auf die Montageeinheit M mit den beiden durchgeführten Reihen R1 und R2 entsprechend Figur 1.

In Förderrichtung vor den eigentlichen Verbindungseinheiten 41,42 und Stanzeinheit 43 befindet sich eine Positioniereinheit 30 zur Realisierung der Positionierungsstrecke S1:

Diese Positioniereinheit 30 besteht im dargestellten- Ausführungsbeispiel aus drei aufeinanderfolgenden miteinander fluchtenden Montageplatten 31,32,33. Auf der ersten Montageplatte 31 befinden sich Bauteile in Form von zwei gegenüberliegenden Führungsbögen 31A,31B, entsprechende Führungsbögen 33A,33B sind auf der Montageplatte 33 vorgesehen. Die Führungsbögen sind so dimensioniert und gegeneinander positioniert, daß sie einen S-förmigen Bahnverlauf der zweiten Reihe R1 mit dem abgewinkelten Montagestreifen 21 ermöglichen, ihr lichter Abstand ist so gewählt, daß sie einen Fuhrungskanal bilden, durch den auch die nicht abgebogenen Abschnitte des Montagestreifens 21 im Bereich des T-förmigen Anschlußstückes zu den Bauteilen 20 durchgeführt werden können, d.h., der Montagestreifen 21 taucht mit seinem unteren, senkrecht zur Zeichenebene abgewinkelten Abschnitt in den zwischen den Führungsbögen gebildeten Führungskanal ein, der obere Abschnitt ragt aus dem Führungskanal heraus.

Damit ist eine kontinuierliche Zwangsführung der zweiten Reihe R2 in der gewünschten S-förmigen Positionierungsstrecke S1 erreicht, an deren Ende jeweils ein erstes Bauteil 10 und ein zweites Bauteil 20 stirnseitig gegeneinander positioniert sind, so daß dann in konventioneller Art und Weise mit Stempel und Stanzeinheiten die eigentliche Montage durchgeführt werden kann, d.h., die beiden Bauteile 10 und 20 aufeinandergesteckt und unter Verformung verbunden werden, wozu die Bauteile 20 von den T-förmigen Verbindungsstücken an ihrem Montagestreifen 21 durch Stanzen vereinzelt werden. Am Abgabeende der Montageeinheit M werden demnach die erste Reihe R1 mit den fertig montierten Kontaktteilen abgegeben und der Montagestreifen 21 als Ausschuß.

Die relative Zuordnung der beiden Reihen R1 und R2 kann beliebig erfolgen, zweckmäßig ist jedoch eine hängende Anordnung übereinander, wobei dann die Zeichenebene- der Figuren 1 und 2 die vertikale Ebene ist.

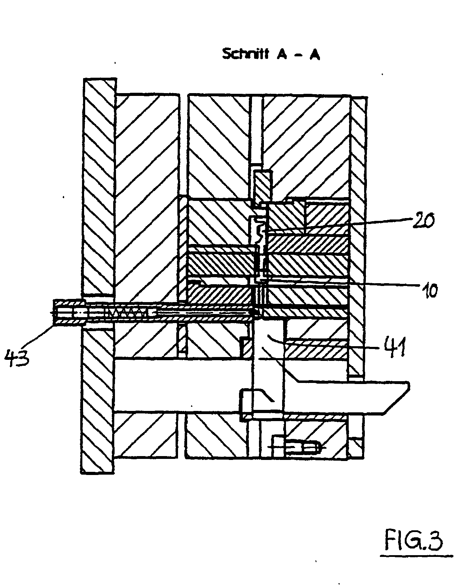

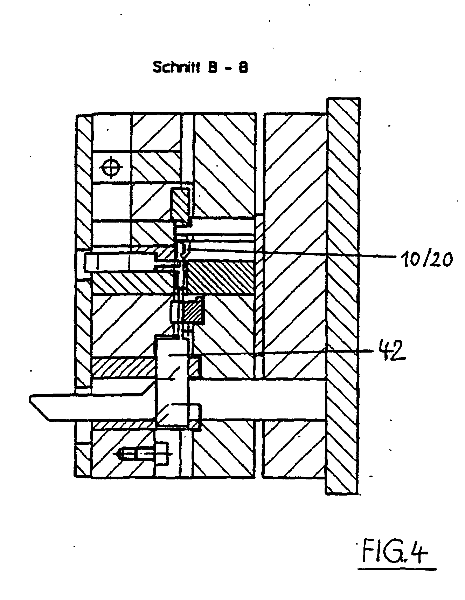

Figuren 3 und 4 zeigen zwei Querschnitte durch die Montageeinheit,. wobei zur Verdeutlichung der Schnittechnik Figur 3 links und Figur 4 rechts von Figur 2 anzuordnen ist.

Während in der Schnittdarstellung der Figur 3 in der Ebene A-A die beiden gegenüberliegenden Bauteile 10 und 20 noch voneinander getrennt sind und die Vereinzelung mittels der Stanzeinheit 43 erfolgt, zeigt Figur 4 bereits das fertig montierte Kontakt- oder Schaltelement nach Ausführung entsprechender Querhube der beiden Stempel 41 und 42.

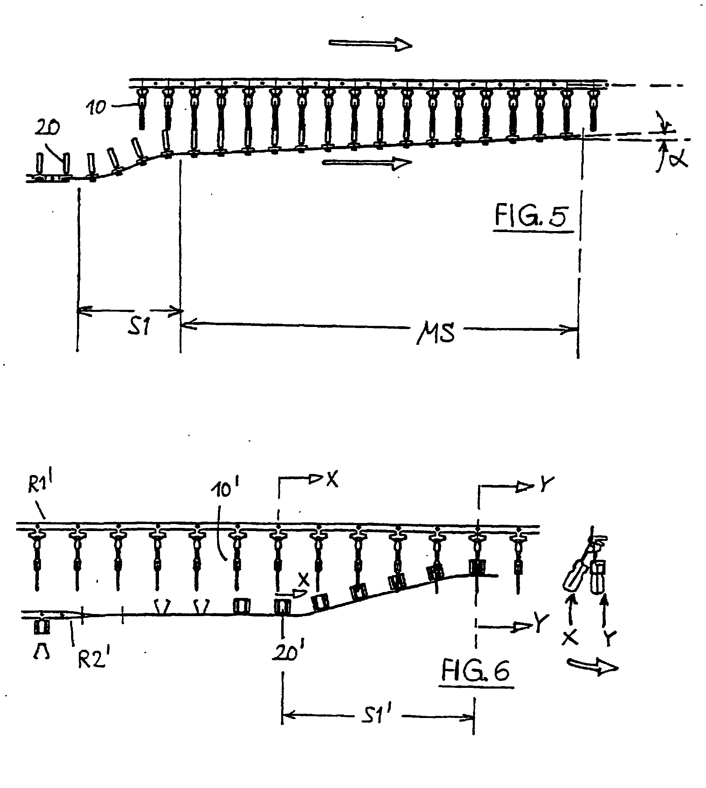

Figur 5 zeigt schematisch, wie anstelle der in den Figuren 1 bis 4 dargestellten konventionellen Montage durch transversale Hubbewegungen von Stempeleinheiten die Endmontage der Bauteile auch durch eine sinngemäße Fortsetzung der technischen Lehre der stetigen oder kontinuierlichen Verschiebung der beiden Bauteilreihen R1 und R2 zueinander durchgeführt werden kann:

Im Anschluß an die eingangs erläuterte Positionierungsstrecke S1 ist eine Montagestrecke MS vorgesehen, die dazu dient, daß die Bauteile 20 kontinuierlich über ihre zugehörigen Bauteile 10 bis in die vorgesehene Endposition geführt werden, wo sie dann gegebenenfalls mit Zusatzwerkzeugen verrastet, verklemmt oder sonst miteinander verbunden werden.

Hierzu sind die zugeordneten Montagestreifen 11 und 21 so zueinander geführt, daß sie im Bereich der Montagestrecke MS einen spitzen. Winkel α miteinander einschließen. Dieser Winkel α kann hinsichtlich des Platzbedarfs einerseits und der Sicherheit der Montage andererseits optimiert werden: je größer der Winkel α ist, umso kürzer wird die Montagestrecke MS sein, je näher er bei Null Grad liegt, umso sicherer ist die Fluchtung der beiden zugeordneten Bauteile 10 und 20 und umso sicherer werden folglich Montagefehler oder Störungen durch Verkantungen oder ähnliches vermieden werden können. Hier ist es auch denkbar, zur Erhöhung der Zuverlässigkeit im Übergangsbereich zwischen Positionierungsstrecke und Montagestrecke spezielle Ausrichtungs- und Synchronisierbauteile vorzusehen, mit deren Hilfe eine Zwangspositionierung jeweils zugeordneter erster Bauteile 10 und zweiter Bauteile 20 erreichbar ist, was eine Vergrößerung des Winkels α und damit eine kompaktere Bauweise ermöglicht.

Figur 6 zeigt schließlich eine zweite Variante des in Figur 1 dargestellten ersten Arbeitsprinzips; hier handelt es sich um konstruktiv verschieden ausgelegte Bauteile 10 und 20, die eine Montage nicht miteinander fluchtend, sondern mit Längsseiten einander gegenüberliegend erfordern. Auch hier kann das erfindungsgemäße Prinzip eingesetzt werden, in dem bei der hier knickartig dargestellten Abbiegung in der Positionierungsstrecke das zweite Bauteil 20' über das zugehörige Bauteil 10' gefördert wird, das bei der gewählten Darstellung aus der Zeichenebene nach unten abgeknickt ist (Position X), so daß die Montage (Position Y) dann im Beispiel dadurch erfolgt, daß das erste Bauteil 10' nach oben geklappt wird, gegebenenfalls noch verformt wird (beispielsweise mit seitlichen Laschen) und so dann die gewünschte Verbindung mit dem zweiten Bauteil 20' hergestellt wird.

Auch hier läßt sich das erfindungsgemäße Verfahren sinnvoll einsetzen, um eine systemgemäße, d.h. entsprechend der konstruktiven Ausführung der jeweiligen Bauteile, Verbindung dieser beiden Bauteile unter Minimierung von Hubbewegungen oder Stempelmechanismen zu erreichen.

## Patentansprüche

1. Verfahren zur Herstellung von mehrteiligen, insbesondere zweiteiligen Kontakt- oder Schaltelementen mittels Zuführung jeweils eines ersten Bauteils aus einer ersten Reihe aneinander hängen der erster Bauteile zu jeweils einem zweiten Bauteil in einer synchron bewegten, zweiten Reihe aneinander hängender zweiter Bauteile,
dadurch gekennzeichnet, daß zumindest die zweite Reihe (R2) der zweiten Bauteile (20) stetig, auf einer abschnittweise gekrümmten Positionierungsstrecke (S1) so weit der ersten Reihe (R1) der ersten Bauteile (10) zugeführt wird, daß jeweils ein erstes und ein zweites Bauteil unmittelbar gegenüber positioniert werden, und daß danach nach Vereinzelung der ersten Bauteile (10) von der ersten Reihe (R1) ein Montagehub oder eine kontinuierliche Verschiebebewegung senkrecht zur Förderrichtung der ersten Reihe die beiden Bauteile systemgemäß miteinander verbindet.

2. Verfahren nach Anspruch 1, dadurch gekennzeichnet, daß die zweite Reihe (R2), bestehend aus einem Montagestreifen (21), mit den anhängenden Bauteilen (20) vor dem Durchlaufen der gekrümmten oder abgewinkelten Bahn derart umgeformt wird, daß er aus der gemeinsamen Ebene der ersten und zweiten Bauteile (10, 20) senkrecht abgewinkelt wird, so daß die Ebene dieses Montagestreifens (21) senkrecht zur Ebene der gekrümmten Bahn steht, so daß der Biegewiderstand minimiert ist.

3. Verfahren nach Anspruch 1, dadurch gekennzeichnet, daß diejenige Reihe, bestehend aus einem Montagestreifen mit den anhängenden Bauteilen, die die gekrümmte Bahn durchläuft, derart ausgebildet ist, daß der Montagestreifen in der Ebene der ersten und zweiten Bauteile mäanderförmig oder zickzackähnlich verläuft, so daß der Biegewiderstand minimiert ist.

4. Verfahren nach Anspruch 1, dadurch gekennzeichnet, daß die Positionierungsstrecke (S1) in ihrem Endbereich tangential zur anderen Reihe derart geführt ist, daß die einander zugeordneten ersten und zweiten Bauteile montagebereit gegenüberliegen.

5. Verfahren nach Anspruch 1, dadurch gekennzeichnet, daß die Positionierung (S1') einer Reihe (R2') in ihrem Endbereich relativ zur anderen Reihe (R1') derart geführt ist, daß die einander zugeordneten ersten und zweiten Bauteile (10', 20') mit ihren Seitenflächen montagebereit übereinander oder nebeneinander liegen.

6. Verfahren nach Anspruch 4 oder 5, dadurch gekennzeichnet, daß nach Erreichen der jeweiligen montagebereiten Position der Bauteile deren Reihen unter spitzem Winkel (α) solange aufeinander zuführt und ineinander geschoben oder gesteckt werden, bis die Montage durchgeführt ist.

7. Vorrichtung zur Durchführung des Verfahrens nach Anspruch 1 und 2 mit Zuführeinrichtungen zur Zuführung erster Bauteile (10) und zweiter Bauteile (20), die an entsprechenden ersten und zweiten Montagestreifen (11, 21) gehalten sind, wobei die ersten und zweiten Bauteile (10, 20) sich stirnseitig gegenüberliegen und in eine Montageposition geführt werden, gekennzeichnet durch eine Positionierungsstrecke (S1), die Führungsbögen (31A,B;33A,B) aufweist, zwischen denen der abgewinkelte zweite Montagestreifen (21) stetig soweit dem ersten Montagestreifen (11), in den Wirkungsbereich von Stanz- und Hubeinrichtungen (41, 42, 43) einer Montageeinheit (M) geführt ist, daß jeweils ein erstes (10) und ein zweites (20) Bauteil unmittelbar gegenüber positioniert werden, wobei nach Vereinzelung der ersten Bauteile (10) von dem ersten Montagestreifen (11) die beiden Bauteile durch einen Montagehub der Hubeinrichtunge (41, 42, 43) oder eine Kontinuierliche Verschiebebewegung senkrecht zur Förderrichtung des ersten Montagestreifens (11) miteinander Verbunden werden können.

8. Vorrichtung nach Anspruch 7, dadurch gekennzeichnet, daß die Führungsbögen zwei aufeinanderfolgende, kreisbogenförmige Abschnitte bilden, die eine S-förmige Positionierungsstrecke (S1) erzeugen.

## Claims

1. Method of producing multi-part, more especially two-part, contact or switching elements by supplying a respective first component from a first row of first components, which adhere to one another, to a respective second component in a synchronously moving second row of second components which adhere to one another, characterised in that at least the second row (R2) of the second components (20) is supplied constantly to the first row (R1) of first components (10) to such an extent along a positioning path (S1), which is curved in sections, that a respective first component and a respective second component are positioned directly opposite each other, and in that, after the first components (10) have been separated from the first row (R1), a mounting movement or a continuous displacement movement perpendicular to the direction of conveyance of the first row then interconnects the two components systematically.

2. Method according to claim 1, characterised in that the second row (R2), which comprises a mounting strip (21) and has the adherent components (20), is transformed in such a manner, prior to travelling over the curved or angular path, that said mounting strip is bent at right angles from the common plane of the first and second components (10, 20) so that the plane of this mounting strip (21) lies perpendicular to the plane of the curved path so that the bending resistance is minimised.

3. Method according to claim 1, characterised in that the row, which comprises a mounting strip with the adherent components and travels over the curved path, is configured in such a manner that the mounting strip extends in the plane of the first and second components in a serpentine-or zigzag-like manner, so that the bending resistance is minimised.

4. Method according to claim 1, characterised in that the positioning path (S1) is guided in its end region tangentially relative to the other row in such a manner that the first and second components, which are associated with one another, lie opposite one another ready for mounting.

5. Method according to claim 1, characterised in that the positioning (S1') of one row (R2') is guided in its end region relative to the other row (R1') in such a manner that the first and second components (10', 20'), which are associated with one another, lie above or adjacent one another with their lateral surfaces ready for mounting.

6. Method according to claim 4 or 5, characterised in that, once the components have reached the respective position ready for mounting, the rows of components are supplied one on top of the other and pushed or inserted into one another at an acute angle (∝) until the mounting is accomplished.

7. Apparatus for accomplishing the method according to claims 1 and 2, having supply means for supplying first components (10) and second components (20), which are retained on corresponding first and second mounting strips (11, 21), the first and second components (10, 20) being situated opposite one another at their end faces and being guided into a mounting position, characterised by a positioning path (S1), which includes guide curvatures (31A,B;33A,B), between which is constantly guided the angular second mounting strip (21) to the first mounting strip (11) into the range of operation of stamping and lifting arrangements (41, 42, 43) of a mounting unit (M) to such an extent that a first component (10) and a second component (20) are positioned directly opposite each other, the two components being able to be interconnected by a mounting movement of the lifting arrangements (41, 42, 43) or by a continuous displacement movement perpendicular to the direction of conveyance of the first mounting strip (11) after the first components (10) have been separated from the first mounting strip (11).

8. Apparatus according to claim 7, characterised in that the guide curvatures form two successive, circular-arc portions which produce an S-shaped positioning path (S1).

## Revendications

1. Procédé de fabrication d'éléments de contact ou de commutation en plusieurs parties, en particulier en deux parties, par amenée chaque fois d'une première pièce d'une première file de premières pièces attachées les unes aux autres à chaque fois une deuxième pièce dans une deuxième file mue en synchronisme de deuxièmes pièces attachées les unes aux autres,
caractérisé par le fait qu'au moins la deuxième file (R2) des deuxièmes pièces (20) est, progressivement, sur un trajet de positionnement courbe par endroits (S1), amenée à la première file (R1) des premières pièces (10) jusqu'à ce que chaque fois une première et une deuxième pièces soient positionnées directement l'une en face de l'autre, et qu'après cela, après détachement des premières pièces (10) de la première file (R1), une course de montage ou un mouvement continu de translation perpendiculairement à la direction de transport de la première file assemble les deux pièces selon un système.

2. Procédé selon la revendication 1, caractérisé par le fait que la deuxième file (R2), constituée d'une bande de montage (21) avec les pièces (20) attachées, est, avant le parcours de la voie courbe ou coudée, transformée de façon telle que la bande de montage soit basculée transversalement de 90° du plan commun des premières et deuxième pièces (10, 20), de sorte que le plan de cette bande de montage (21) devient perpendiculaire au plan de la voie courbe, de sorte que la résistance à la flexion est réduite au minimum.

3. Procédé selon la revendication 1, caractérisé par le fait que la file, constituée d'une bande de montage avec les pièces attachées, qui parcourt la voie courbe, est faite de façon telle que la bande de montage s'étende en méandres ou de façon semblable à un zigzag dans le plan des premières et deuxièmes pièces, de sorte que la résistance à la flexion est réduite au minimum.

4. Procédé selon la revendication 1, caractérisé par le fait que le trajet de positionnement (S1), dans sa partie d'extrémité, est tangent à l'autre file de façon telle que les premières et deuxièmes pièces associées soient face à face prêtes au montage.

5. Procédé selon la revendication 1, caractérisé par le fait que le trajet de positionnement (S1') d'une file (R2') est, dans sa partie d'extrémité, dirigé par rapport à l'autre file (R1') de façon telle que les premières et deuxièmes pièces (10', 20') associées aient, prêtes au montage, leurs faces latérales l'une au-dessus de l'autre ou l'une à côté de l'autre.

6. Procédé selon l'une des revendications 4 et 5, caractérisé par le fait que lorsque les pièces ont atteint leur position respective prête au montage, leurs files sont amenées l'une sur l'autre et glissées ou enfichées l'une dans l'autre sous un angle aigu (a) jusqu'à ce que le montage soit exécuté.

7. Dispositif pour l'exécution du procédé selon les revendications 1 et 2, comportant des dispositifs d'amenée de premières pièces (10) et de deuxièmes pièces (20) qui sont tenues sur des première et deuxième bandes de montage correspondantes (11, 21), les premières et deuxièmes pièces (10, 20) se faisant face frontalement et étant menées dans une position de montage, caractérisé par un trajet de positionnement (S1) qui présente des arcs de guidage (31A,B ; 33A,B) entre lesquels la deuxième bande de montage (21) basculée est menée progressivement à la première bande de montage (11), dans la zone d'action de dispositifs d'estampage et élévateurs (41, 42, 43) d'un organe de montage (M), jusqu'à ce que chaque fois une première pièce (10) et une deuxième pièce (20) soient positionnées directement l'une en face de l'autre, les deux pièces pouvant alors, après détachement des premières pièces (10) de la première bande de montage (11), être assemblées par une course de montage des dispositifs élévateurs (41, 42, 43) ou un mouvement continu de translation perpendiculairement à la direction de transport de la première bande de montage (11).

8. Dispositif selon la revendication 7, caractérisé par le fait que les arcs de guidage forment deux tronçons en arc de cercle successifs qui produisent un trajet de positionnement en forme de S (S1).
